# EUROPEAN PATENT APPLICATION

(11) **EP 4 703 845 A1**
(43) Date of publication of application: **04.03.2026**
(21) Application number: 25187963.1
(22) Date of filing: 07.07.2025
(51) Int. Cl.: G06F 1/26, G06F 1/3206, G06F 1/3212

(54) **ELECTRONIC APPARATUS AND CONTROL METHOD**

(30) Priority: 30.08.2024 JP 2024148265
(71) Applicant: Lenovo (Singapore) Pte. Ltd., New Tech Park 556741 (SG)
(72) Inventor: INOUE, Keisuke, Yokohama-shi, Kanagawa (JP); TAGAMI, Yuta, Yokohama-shi, Kanagawa (JP); SUMIKAWA, Toshinari, Yokohama-shi, Kanagawa (JP); ODA, Hiroki, Yokohama-shi, Kanagawa (JP)
(74) Representative: Openshaw & Co.

(57) **Abstract**

Provided are an electronic apparatus and control method that can secure a target operating time. An electronic apparatus includes: a battery; two or more electronic circuits that operate with power supplied from the battery; and a controller. The controller acquires power information indicating power consumption of each of the two or more electronic circuits, acquires capacity information indicating remaining capacity of the battery, receives time information indicating a target time for which the two or more electronic circuits are to operate, and adjusts the power consumption of each of the two or more electronic circuits based on the power information and the capacity information so that the two or more electronic circuits will operate for the target time or longer.

## Description

### BACKGROUND OF THE INVENTION

### Field of the Invention

The present invention relates to an electronic apparatus and a control method.

### Description of the Related Art

Various electronic apparatuses that operate with power supplied from batteries are used. To secure the operating time of an electronic apparatus, the power consumption of each part of the electronic apparatus may need to be limited. There are conventional technologies that can limit the power consumption of an electronic apparatus by setting a mode such as a power saving mode in the electronic apparatus.

Japanese Unexamined Patent Application Publication No. 2004-129355 discloses a technology that displays the remaining operation time of a battery included in an electronic apparatus.

### SUMMARY OF THE INVENTION

Although there are conventional technologies that limit the power consumption of an electronic apparatus, adjusting the power consumption to secure the operating time desired by the user is not possible.

The present invention has an object of providing an electronic apparatus and control method that can secure a target operating time.

One aspect of the present invention is an electronic apparatus including: a battery; two or more electronic circuits that operate with power supplied from the battery; and a controller, wherein the controller acquires power information indicating power consumption of each of the two or more electronic circuits, acquires capacity information indicating remaining capacity of the battery, receives time information indicating a target time for which the two or more electronic circuits are to operate, and adjusts the power consumption of each of the two or more electronic circuits based on the power information and the capacity information so that the two or more electronic circuits will operate for the target time or longer.

In the aspect of the present invention, the controller may adjust power consumption of at least one electronic circuit out of the two or more electronic circuits based on a magnitude of the power consumption of each of the two or more electronic circuits.

In the aspect of the present invention, the controller may receive electronic circuit information indicating at least one electronic circuit out of the two or more electronic circuits, and adjust power consumption of the at least one electronic circuit indicated by the electronic circuit information.

In the aspect of the present invention, the controller may display the power consumption indicated by the power information on a display.

In the aspect of the present invention, the controller may reduce the power consumption of the at least one electronic circuit when the remaining capacity indicated by the capacity information is less than capacity required for the two or more electronic circuits to operate for the target time.

In the aspect of the present invention, the controller may increase the power consumption of the at least one electronic circuit when the remaining capacity indicated by the capacity information is greater than capacity required for the two or more electronic circuits to operate for the target time.

One aspect of the present invention is a control method of adjusting power consumption of two or more electronic circuits that operate with power supplied from a battery, the control method including: a step of acquiring power information indicating power consumption of each of the two or more electronic circuits; a step of acquiring capacity information indicating remaining capacity of the battery; a step of receiving time information indicating a target time for which the two or more electronic circuits are to operate; and a step of adjusting the power consumption of each of the two or more electronic circuits based on the power information and the capacity information so that the two or more electronic circuits will operate for the target time or longer.

The above-described aspects of the present invention can secure a target operating time.

### BRIEF DESCRIPTION OF THE DRAWINGS

FIG. 1 is a diagram illustrating an example of the hardware structure of an electronic apparatus according to an embodiment.
FIG. 2 is a diagram illustrating an example of the functional structure of the electronic apparatus according to the embodiment.
FIG. 3 is a flowchart illustrating an example of the operation of the electronic apparatus according to the embodiment.
FIG. 4 is a diagram illustrating an example of a screen of a display unit in the electronic apparatus according to the embodiment.
FIG. 5 is a pie chart illustrating an example of the power consumption of each electronic circuit in the electronic apparatus according to the embodiment.
FIG. 6 is a diagram illustrating an example of a screen of the display unit in the electronic apparatus according to the embodiment.

### DETAILED DESCRIPTION OF THE INVENTION

An embodiment of the present invention will be described below with reference to the drawings.

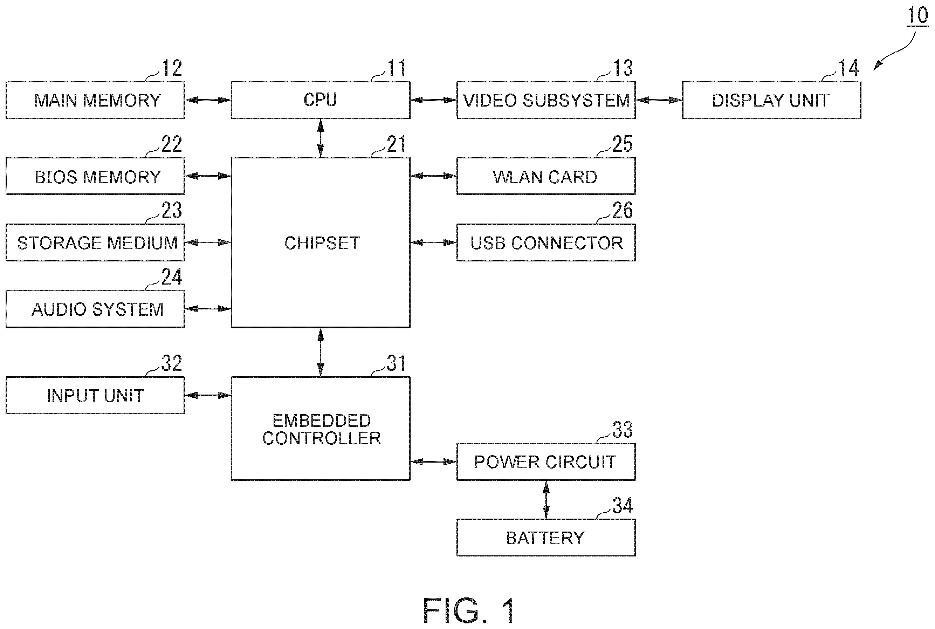

An example of the hardware structure of an electronic apparatus 10 according to an embodiment will be described with reference to FIG. 1. FIG. 1 is a block diagram illustrating an example of the hardware structure of the electronic apparatus 10.

The electronic apparatus 10 includes a CPU 11, a main memory 12, a video subsystem 13, a display unit 14, a chipset 21, a BIOS memory 22, a storage medium 23, an audio system 24, a wireless local area network (WLAN) card 25, a Universal Serial Bus (USB) connector 26, an embedded controller 31, an input unit 32, a power circuit 33, and a battery 34.

The CPU 11 executes various arithmetic processes under program control, and controls the overall electronic apparatus 10. For example, the CPU 11 executes processes based on the programs of an operating system (OS) and Basic Input/Output System (BIOS). The CPU 11 is an example of a processor.

The main memory 12 is a writable memory used as an area for reading execution programs of the CPU 11 or a work area for writing processed data of the execution programs. For example, the main memory 12 is made up of a plurality of dynamic random access memory (DRAM) chips. The execution programs include the OS, various drivers for operating hardware of peripherals, various services/utilities, application programs, and the like.

The video subsystem 13 is a subsystem for implementing functions relating to image display, and includes a video controller. The video controller processes a drawing instruction from the CPU 11, and writes the processed drawing information to a video memory. The video controller also reads the drawing information from the video memory, and outputs it to the display unit 14 as drawing data (display data).

The display unit 14 is, for example, a liquid crystal display or an organic EL display, and displays a display screen based on the drawing data (display data) output from the video subsystem 13.

The chipset 21 includes controllers such as USB, Serial AT Attachment (ATA), Serial Peripheral Interface (SPI) bus, Peripheral Component Interconnect (PCI) bus, PCI-Express bus, and Low Pin Count (LPC) bus, and is connected to a plurality of devices. For example, the plurality of devices include the below-described BIOS memory 22, storage medium 23, audio system 24, WLAN card 25, USB connector 26, and embedded controller 31.

The BIOS memory 22 is, for example, composed of an electrically rewritable non-volatile memory such as electrically erasable programmable read only memory
(EEPROM) or flash ROM. The BIOS memory 22 stores the BIOS, system firmware for controlling the embedded controller 31, etc., and the like. The BIOS memory 22 is an example of a sub-memory.

The storage medium 23 includes a hard disk drive (HDD), a solid state drive (SSD), and the like. For example, the storage medium 23 stores the OS, various drivers, various services/utilities, application programs, and various data.

The audio system 24 is connected to a microphone and a speaker (not illustrated), and records, reproduces, and outputs sound data. The microphone and the speaker are included in the electronic apparatus 10, for example.

The WLAN card 25 connects to a network via a wireless LAN, to perform data communication. For example, upon receiving data from the network, the WLAN card 25 generates an event trigger indicating the reception of the data. The USB connector 26 is a connector for connecting peripherals using USB.

The input unit 32 collectively refers to input devices (input equipment) included in the electronic apparatus 10. The input unit 32 includes a keyboard, a mouse, etc. The input unit 32 outputs input information input by a user's operation to the embedded controller 31.

The power circuit 33 includes, for example, a DC/DC converter, a charge/discharge unit, and an AC/DC adapter. For example, the power circuit 33 converts a DC voltage supplied from an external power source such as an AC adapter (not illustrated) or the battery 34 into a plurality of voltages required to operate the electronic apparatus 10. The power circuit 33 supplies power to each part of the electronic apparatus 10 based on control by the embedded controller 31.

The battery 34 is, for example, a secondary battery such as a lithium-ion battery. When power is supplied to the electronic apparatus 10 from an external power source, the battery 34 is charged via the power circuit 33. When power is not supplied to the electronic apparatus 10 from the external power source, the battery 34 outputs the stored power via the power circuit 33 as operating power for the electronic apparatus 10.

The embedded controller 31 is a one-chip microcomputer that monitors and controls various devices (peripherals, sensors, etc.) regardless of the system state of the electronic apparatus 10. The embedded controller 31 includes a CPU, a ROM, and a RAM, as well as A/D input terminals, D/A output terminals, timers, and digital input and output terminals of a plurality of channels (not illustrated). The digital input and output terminals of the embedded controller 31 are connected to the input unit 32, the power circuit 33, and the like, and the embedded controller 31 controls their operations. The embedded controller 31 also controls, for example, changes to the clock frequency of the CPU 11 via the chipset 21.

The electronic apparatus 10 may have a display device integrally attached to the chassis, like a clamshell personal computer, a tablet terminal, or a portable apparatus such as a smartphone. Alternatively, the electronic apparatus 10 may have a display device separated from the apparatus body, like a desktop personal computer. The electronic apparatus according to this embodiment is applicable to all apparatuses that include a CPU.

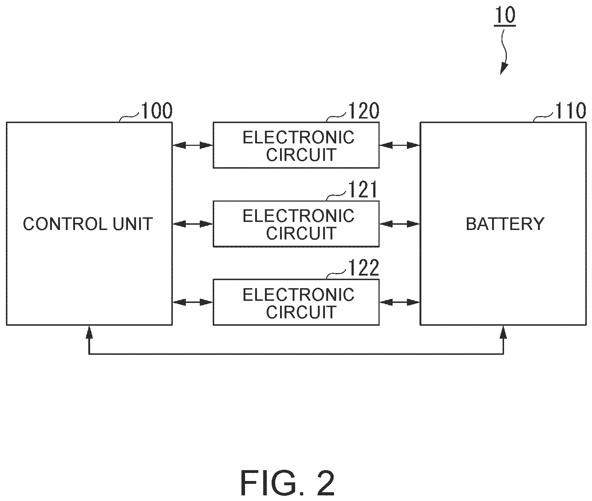

An example of the functional structure of the electronic apparatus 10 will be described with reference to FIG. 2. FIG. 2 is a block diagram illustrating an example of the functional structure of the electronic apparatus 10 relating to the adjustment of the power consumption of each part of the electronic apparatus 10.

The electronic apparatus 10 includes a control unit 100, a battery 110, and electronic circuits 120 to 122. The functions of the control unit 100 are achieved by the CPU 11, the embedded controller 31, or a combination of the CPU 11 and the embedded controller 31. The functions of the battery 110 are achieved by the power circuit 33 and the battery 34.

The electronic circuits 120 to 122 operate with power supplied from the battery 110. For example, the electronic circuit 120 corresponds to the display unit 14, the electronic circuit 121 corresponds to the CPU 11, and the electronic circuit 122 corresponds to the main memory 12. Although three electronic circuits 120 to 122 are illustrated in FIG. 2, the number of electronic circuits is not limited to three. The electronic apparatus 10 includes two or more electronic circuits.

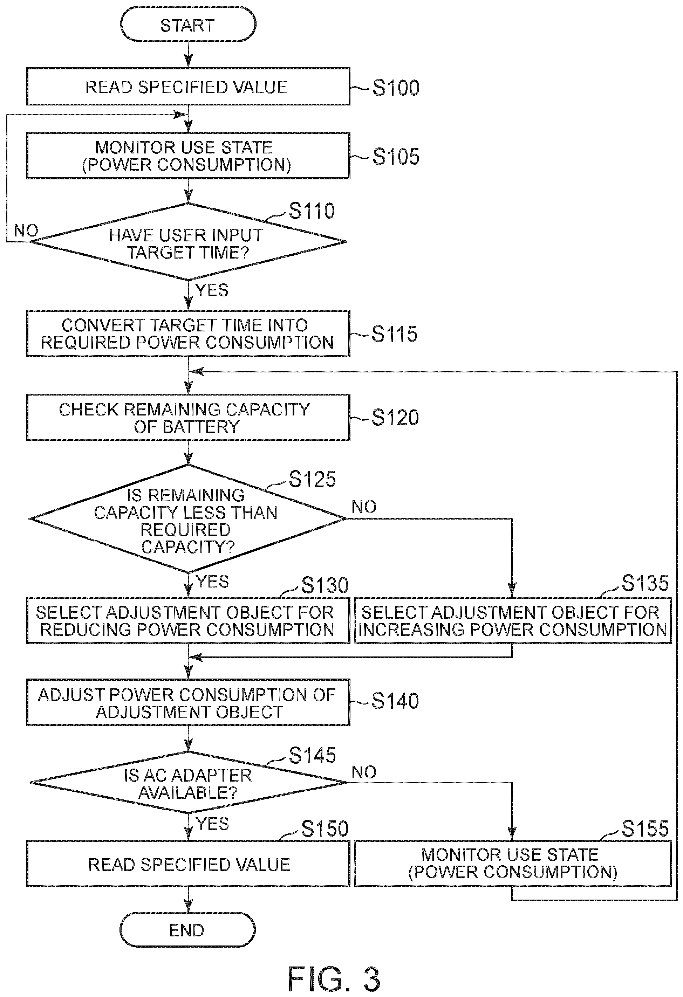

Processing executed by the electronic apparatus 10 will be described with reference to FIG. 3. FIG. 3 is a flowchart illustrating an example of the operation of the electronic apparatus 10.

(Step S100) The control unit 100 reads a specified value set by the OS. The specified value indicates a parameter related to the power consumption of the electronic circuits 120 to 122.

(Step S105) The control unit 100 monitors the power consumption of the electronic circuits 120 to 122, and acquires power information indicating the power consumption of each electronic circuit per unit time.

(Step S110) The control unit 100 monitors the input unit 32, and determines whether the user has input a target time for the operation of the electronic apparatus 10 to the input unit 32. If the user has not input a target time to the input unit 32, the control unit 100 executes step S105. If the user has input a target time to the input unit 32, the control unit 100 receives time information indicating the target time.

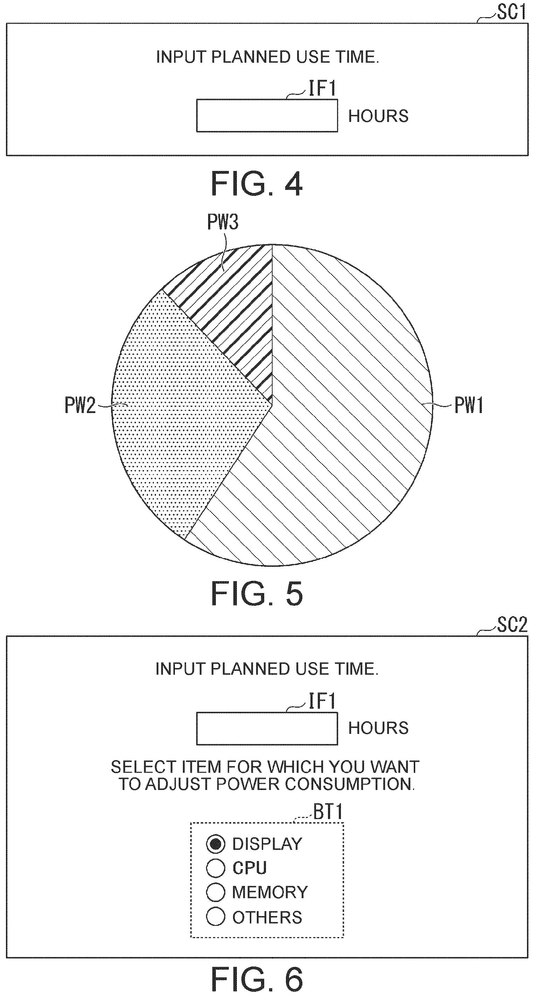

FIG. 4 illustrates an example of a screen of the display unit 14. The display unit 14 displays an input screen SC1 for the user to input a target time. The input screen SC1 includes an input field IF1. The user operates the input unit 32 to input the target time to the input field IF1. The control unit 100 receives time information indicating the target time input in the input field IF1.

(Step S115) The control unit 100 converts the target time indicated by the time information into power consumption (required power consumption). Here, on the assumption that the electronic circuits 120 to 122 operate according to the specified value set by the OS, the control unit 100 calculates the total power consumption of the electronic circuits 120 to 122 for the target time as the required power consumption.

(Step S120) The control unit 100 checks the remaining capacity of the battery 110, and acquires capacity information indicating the remaining capacity.

Step S120 may be executed between steps S105 and S110. The control unit 100 may convert the remaining capacity of the battery 110 into the time for which the electronic apparatus 10 can operate. The control unit 100 may display the time on the display unit 14. The user can input the target time for the operation of the electronic apparatus 10 by referring to the time for which the electronic apparatus 10 can operate.

(Step S125) The control unit 100 determines whether the remaining capacity of the battery 110 is less than the capacity (required capacity) for supplying power corresponding to the required power consumption.

(Step S130) If the remaining capacity of the battery 110 is less than the required capacity, the power consumption of the electronic circuits 120 to 122 needs to be reduced in order to operate the electronic apparatus 10 for the target time. The control unit 100 selects at least one of the electronic circuits 120 to 122 as an object of adjustment (adjustment object) for reducing power consumption.

FIG. 5 is a pie chart illustrating an example of the power consumption of each of the electronic circuits 120 to 122. The power consumption PW1 of the electronic circuit 120, the power consumption PW2 of the electronic circuit 121, and the power consumption PW3 of the electronic circuit 122 are illustrated in the drawing. The power consumption PW1 of the electronic circuit 120 is the highest. Typically, liquid crystal displays consume large amounts of power. For example, in the case where the electronic circuit 120 corresponds to the display unit 14, the control unit 100 selects the electronic circuit 120 as an adjustment object. The control unit 100 may select two or more electronic circuits in descending order of power consumption as adjustment objects.

(Step S135) If the remaining capacity of the battery 110 is greater than the required capacity, there is no need to reduce the power consumption of the electronic circuits 120 to 122, and the power consumption of the electronic circuits 120 to 122 can be increased. The control unit 100 selects at least one of the electronic circuits 120 to 122 as an adjustment object for increasing power consumption. The control unit 100 may select the electronic circuit with the highest power consumption as an adjustment object, as in step S130. Alternatively, the control unit 100 may select the electronic circuit with the lowest power consumption as an adjustment object. The control unit 100 may select two or more electronic circuits in descending or ascending order of power consumption as adjustment objects. Step S135 may be skipped if there is no need to increase the power consumption of the electronic circuits 120 to 122.

(Step S140) The control unit 100 adjusts the power consumption of the adjustment object selected in step S130 or S135. For example, in the case where the electronic circuit 120 is selected as the adjustment object in step S130, the control unit 100 reduces the power consumption of the electronic circuit 120 so that the total power consumption of the electronic circuits 120 to 122 for the target time will be less than or equal to the required power consumption. In the case where the electronic circuit 120 is selected as the adjustment object in step S135, the control unit 100 increases the power consumption of the electronic circuit 120 so that the total power consumption of the electronic circuits 120 to 122 for the target time will be less than or equal to the required power consumption. For example, in the case where the electronic circuit 120 corresponds to the display unit 14, the control unit 100 reduces or increases the brightness of the display unit 14.

If the remaining capacity of the battery 110 is less than the required power consumption, the target time required for the operation of the electronic apparatus 10 can be secured by reducing the power consumption of the electronic circuits 120 to 122. If the remaining capacity of the battery 110 is greater than the required power consumption, by increasing the power consumption of the electronic circuits 120 to 122, the performance of the electronic apparatus 10 can be improved while securing the target time required for the operation of the electronic apparatus 10.

(Step S145) The control unit 100 determines whether the AC adapter is available.

(Step S150) If the AC adapter is available, the electronic apparatus 10 can operate with power supplied from a commercial power source via the AC adapter. Accordingly, the control unit 100 reads the specified value set by the OS, as in step S100. In this case, the adjustment in step S140 is invalidated.

(Step S155) If the AC adapter is not available, the control unit 100 monitors the power consumption of the electronic circuits 120 to 122 and acquires power information indicating the power consumption of each electronic circuit per unit time. Step S120 is then executed.

The control unit 100 may select a first adjustment object for reducing power consumption and a second adjustment object for increasing power consumption in step S130. In this case, the amount of reduction in the power consumption of the first adjustment object in step S140 is greater than the amount of increase in the power consumption of the second adjustment object in step S140.

The control unit 100 may select a first adjustment object for increasing power consumption and a second adjustment object for reducing power consumption in step S135. In this case, the amount of increase in the power consumption of the first adjustment object in step S140 is greater than the amount of reduction in the power consumption of the second adjustment object in step S140.

The user may select an adjustment object for power consumption. An example of this case will be described.

FIG. 6 illustrates an example of a screen of the display unit 14. The display unit 14 displays an input screen SC2 for the user to input a target time. The input screen SC2 includes an input field IF1. The input field IF1 in the input screen SC2 is the same as the input field IF1 in the input screen SC1 illustrated in FIG. 4.

The input screen SC2 includes buttons BT1 for the user to select an adjustment object for power consumption. The user operates the buttons BT1 via the input unit 32 to input adjustment object information indicating an adjustment object. The adjustment object information (electronic circuit information) indicates at least one of the electronic circuits 120 to 122. For example, if the power consumption of the electronic apparatus 10 needs to be reduced and the user places more importance on fast responsiveness than on display brightness, the user selects the display as the processing object. If the power consumption of the electronic apparatus 10 may be increased and the user places more importance on fast responsiveness than on display brightness, the user selects the CPU as the processing object.

The control unit 100 receives the adjustment object information in step S130 or S135. The control unit 100 adjusts the power consumption of the adjustment object indicated by the adjustment object information in step S140. As described above, by adjusting the power consumption of the adjustment object selected by the user, it is possible to secure the target time required for the operation of the electronic apparatus 10 and to maintain or improve the performance of the functions required by the user.

The input screen SC2 may include a pie chart similar to that illustrated in FIG. 5. In detail, the input screen SC2 may include information indicating the power consumption of each of the electronic circuits 120 to 122. The user can flexibly select the adjustment object for power consumption by referring to the power consumption of each electronic circuit.

As described above, the electronic apparatus 10 includes the battery 110, the electronic circuits 120 to 122 that operate with power supplied from the battery 110, and the control unit 100 (controller). The control unit 100 acquires power information indicating the power consumption of each of the electronic circuits 120 to 122, and acquires capacity information indicating the remaining capacity of the battery 110. The control unit 100 receives time information indicating the target time for which the electronic circuits 120 to 122 are to operate. The control unit 100 adjusts the power consumption of each of the electronic circuits 120 to 122 based on the power information and the capacity information so that the electronic circuits 120 to 122 will operate for the target time or longer. Thus, the electronic apparatus 10 can secure the target operating time.

The control unit 100 adjusts the power consumption of at least one electronic circuit out of the electronic circuits 120 to 122 based on the magnitude of the power consumption of each of the electronic circuits 120 to 122. In this way, the control unit 100 can easily select the adjustment object for power consumption based on the magnitude of power consumption.

The control unit 100 receives electronic circuit information indicating at least one electronic circuit out of the electronic circuits 120 to 122, and adjusts the power consumption of the at least one electronic circuit indicated by the electronic circuit information. In this way, the control unit 100 can select the adjustment object for power consumption in accordance with the user's wish.

The control unit 100 displays the power consumption indicated by the power information on the display unit 14 when the user selects the adjustment object. The user can flexibly select the adjustment object for power consumption by referring to the power consumption of each electronic circuit.

The control unit 100 reduces the power consumption of the at least one electronic circuit when the remaining capacity indicated by the capacity information is less than the capacity required for the electronic circuits 120 to 122 to operate for the target time. The control unit 100 can thus secure the target time required for the operation of the electronic apparatus 10.

The control unit 100 increases the power consumption of the at least one electronic circuit when the remaining capacity indicated by the capacity information is greater than the capacity required for the electronic circuits 120 to 122 to operate for the target time. The control unit 100 can thus improve the performance of the electronic apparatus 10 while securing the target time required for the operation of the electronic apparatus 10.

Although an embodiment of the present invention has been described in detail above with reference to the drawings, the specific structures are not limited to the foregoing embodiment, and design changes and the like without departing from the gist of the present invention are also included.

### Description of Symbols

- 10: electronic apparatus
- 11: CPU
- 12: main memory
- 13: video subsystem
- 14: display unit
- 21: chipset
- 22: BIOS memory
- 23: storage medium
- 24: audio system
- 25: WLAN card
- 26: USB connector
- 31: embedded controller
- 32: input unit
- 33: power circuit
- 34, 110: battery
- 35: switch
- 100: control unit
- 120, 121, 122: electronic circuit

## Claims

1. An electronic apparatus comprising:
a battery;
two or more electronic circuits configured to operate with power supplied from the battery; and
a controller,
wherein the controller is configured to acquire power information indicating a power consumption of each of the two or more electronic circuits, acquire capacity information indicating a remaining capacity of the battery, receive time information indicating a target time for which the two or more electronic circuits are to operate, and adjust the power consumption of each of the two or more electronic circuits based on the power information and the capacity information so that the two or more electronic circuits will operate for the target time or longer.

2. The electronic apparatus according to claim 1, wherein the controller is configured to adjust the power consumption of at least one electronic circuit out of the two or more electronic circuits based on a magnitude of the power consumption of each of the two or more electronic circuits.

3. The electronic apparatus according to claim 1 or claim 2, wherein the controller is configured to receive electronic circuit information indicating at least one electronic circuit out of the two or more electronic circuits, and adjust the power consumption of the at least one electronic circuit indicated by the electronic circuit information.

4. The electronic apparatus according to any preceding claim, wherein the controller is configured to display the power consumption indicated by the power information on a display.

5. The electronic apparatus according to any preceding claim, wherein the controller is configured to reduce the power consumption of the at least one electronic circuit when the remaining capacity indicated by the capacity information is less than capacity required for the two or more electronic circuits to operate for the target time.

6. The electronic apparatus according to any preceding claim, wherein the controller is configured to increase the power consumption of the at least one electronic circuit when the remaining capacity indicated by the capacity information is greater than capacity required for the two or more electronic circuits to operate for the target time.

7. A control method for adjusting power consumption of two or more electronic circuits configured to operate with power supplied from a battery, the control method comprising:
acquiring power information indicating a power consumption of each of the two or more electronic circuits;
acquiring capacity information indicating a remaining capacity of the battery;
receiving time information indicating a target time for which the two or more electronic circuits are to operate; and
adjusting the power consumption of each of the two or more electronic circuits based on the power information and the capacity information so that the two or more electronic circuits will operate for the target time or longer.

8. The control method according to claim 7, comprising adjusting the power consumption of at least one electronic circuit out of the two or more electronic circuits based on a magnitude of the power consumption of each of the two or more electronic circuits.

9. The control method according to claim 7 or claim 8, comprising receiving electronic circuit information indicating at least one electronic circuit out of the two or more electronic circuits, and adjusting the power consumption of the at least one electronic circuit indicated by the electronic circuit information.

10. The control method according to any one of claims 7 to 9, comprising displaying the power consumption indicated by the power information on a display.

11. The control method according to any one of claims 7 to 10, comprising reducing the power consumption of the at least one electronic circuit when the remaining capacity indicated by the capacity information is less than capacity required for the two or more electronic circuits to operate for the target time.

12. The control method according to any one of claims 7 to 11, comprising increasing the power consumption of the at least one electronic circuit when the remaining capacity indicated by the capacity information is greater than capacity required for the two or more electronic circuits to operate for the target time.
